# EUROPEAN PATENT APPLICATION

(11) **EP 4 848 767 A1**
(43) Date of publication of application: **02.12.2026**
(21) Application number: 24919274.1
(22) Date of filing: 24.01.2024
(51) Int. Cl.: H04W 8/24

(54) **RESOURCE CONFIGURATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: SHEN, Jia, Dongguan, Guangdong 523860 (CN)
(74) Representative: Aldridge, Henry Alexander
(86) International application number: PCT/CN2024/073863
(87) International publication number: WO 2025/156159

(57) **Abstract**

Provided are a resource configuration method, a terminal device, and a network device. The method comprises: a terminal device receives resource configuration information sent by a network device, the resource configuration information comprising first information and second information, wherein the first information is used for indicating time-domain position information and time-domain length information of a first time-domain resource, the first time-domain resource is used for bearing a first physical channel, and the second information is used for indicating AI/ML configuration information associated with the first physical channel.

## Description

### TECHNICAL FIELD

The present disclosure relates to the field of communication technologies, and more particularly, to a resource configuration method, a terminal device, and a network device.

### BACKGROUND

With the development of communication technologies, wireless communication systems have gradually introduced artificial intelligence/machine learning (AI/ML) processing solutions to replace traditional non-AI/ML processing solutions. In air interface technology, a terminal device can process (receive or send) a physical channel based on an AI/ML model. Different physical channels correspond to different time domain resources, and the AI/ML processing solution suitable for the time domain resource (or the physical channel transmitted within the time domain resource) may also be different. Therefore, how to avoid a mismatch between the time domain resource of the physical channel and the AI/ML processing solution is a problem to be solved.

### SUMMARY

The present disclosure provides a resource configuration method, a terminal device, and a network device. Various aspects involved in the present disclosure are described below.

In a first aspect, there is provided a resource configuration method, including: receiving, by a terminal device, resource configuration information sent by a network device, wherein the resource configuration information includes first information and second information; wherein the first information is used to indicate time domain position information and time domain length information of a first time domain resource, and the first time domain resource is used to carry a first physical channel; wherein the second information is used to indicate AI/ML configuration information associated with the first time domain resource.

In a second aspect, there is provided a resource configuration method, including: sending, by a network device, resource configuration information to a terminal device, wherein the resource configuration information includes first information and second information; wherein the first information is used to indicate time domain position information and time domain length information of a first time domain resource, and the first time domain resource is used to carry a first physical channel; wherein the second information is used to indicate AI/ML configuration information associated with the first time domain resource.

In a third aspect, there is provided a terminal device, including: a first communication unit configured to receive resource configuration information sent by a network device, wherein the resource configuration information includes first information and second information; wherein the first information is used to indicate time domain position information and time domain length information of a first time domain resource, and the first time domain resource is used to carry a first physical channel; wherein the second information is used to indicate AI/ML configuration information associated with the first time domain resource.

In a fourth aspect, there is provided a network device, including: a first communication unit configured to send resource configuration information to a terminal device, wherein the resource configuration information includes first information and second information; wherein the first information is used to indicate time domain position information and time domain length information of a first time domain resource, and the first time domain resource is used to carry a first physical channel; wherein the second information is used to indicate AI/ML configuration information associated with the first time domain resource.

In a fifth aspect, there is provided a terminal device, including a processor, a memory, and a communication interface, wherein the memory is configured to store one or more computer programs, and the processor is configured to invoke the computer program in the memory to enable the terminal device to perform part or all of the steps of the method of the first aspect.

In a sixth aspect, there is provided a network device, including a processor, a memory, and a transceiver, wherein the memory is configured to store one or more computer programs, and the processor is configured to invoke the computer program in the memory to enable the network device to perform part or all of the steps of the method of the second aspect.

In a seventh aspect, there is provided an apparatus, including a processor configured to invoke a program from a memory to enable the apparatus to perform the method according to the first aspect or the second aspect.

In an eighth aspect, there is provided a chip, including a processor configured to invoke a program from a memory to enable a device equipped with the chip to perform the method according to the first aspect or the second aspect.

In a ninth aspect, there is provided a computer-readable storage medium having stored thereon a program for enabling a computer to perform the method according to the first aspect or the second aspect.

In a tenth aspect, there is provided a computer program product, including a program for enabling a computer to perform the method according to the first aspect or the second aspect.

In an eleventh aspect, there is provided a computer program for enabling a computer to perform the method according to the first aspect or the second aspect.

In the embodiments of the present disclosure, a correspondence between the first information (time domain resource configuration information) and the second information (AI/ML configuration information) is established in the resource configuration information, thereby binding the AI/ML configuration information to a specific time domain resource, so as to avoid a mismatch between the time domain resource and the AI/ML processing solution, thus improving the reliability of the wireless communication system.

### BRIEF DESCRIPTION OF THE DRAWINGS

FIG. 1 is a system architecture diagram of a wireless communication system to which embodiments of the present disclosure can be applied.
FIG. 2 is a schematic diagram of a model selection solution provided by related art.
FIG. 3 is a schematic flowchart of a resource configuration method provided by an embodiment of the present disclosure.
FIG. 4 is an example diagram of a downlink scheduling scenario provided by an embodiment of the present disclosure.
FIG. 5 is an example diagram of a downlink scheduling scenario provided by another embodiment of the present disclosure.
FIG. 6 is an example diagram of a downlink scheduling scenario provided by yet another embodiment of the present disclosure.
FIG. 7 is an example diagram of a downlink scheduling scenario provided by another embodiment of the present disclosure.
FIG. 8 is an example diagram of a downlink scheduling scenario provided by another embodiment of the present disclosure.
FIG. 9 is an example diagram of a downlink scheduling scenario provided by another embodiment of the present disclosure.
FIG. 10 is an example diagram of a downlink scheduling scenario provided by another embodiment of the present disclosure.
FIG. 11 is an example diagram of a downlink scheduling scenario provided by another embodiment of the present disclosure.
FIG. 12 is an example diagram of a downlink scheduling scenario provided by another embodiment of the present disclosure.
FIG. 13 is an example diagram of a downlink scheduling scenario provided by another embodiment of the present disclosure.
FIG. 14 is a schematic structural diagram of a terminal device provided by an embodiment of the present disclosure.
FIG. 15 is a schematic structural diagram of a network device provided by an embodiment of the present disclosure.
FIG. 16 is a schematic structural diagram of an apparatus applicable to an embodiment of the present disclosure.

### DETAILED DESCRIPTION

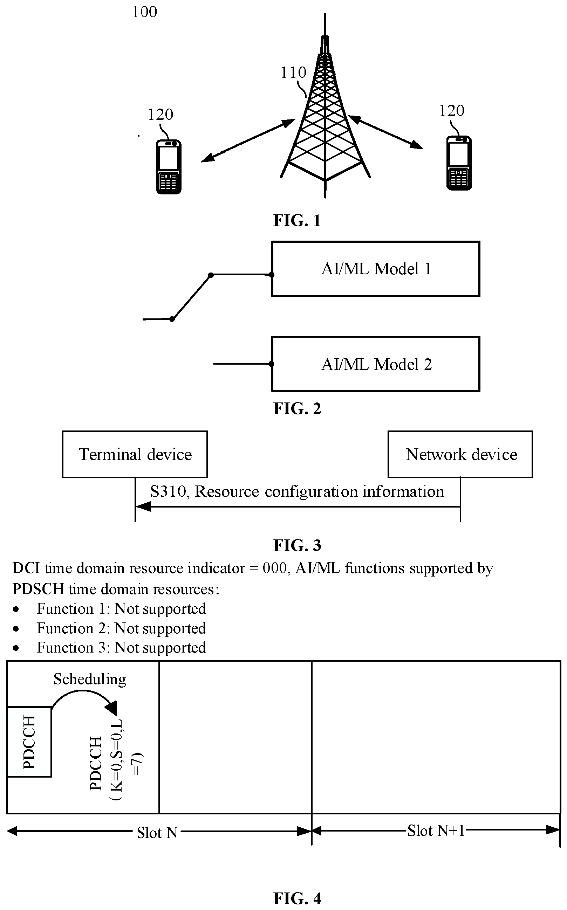

FIG. 1 is an example system architecture diagram of a wireless communication system 100 to which embodiments of the present disclosure can be applied. The wireless communication system 100 may include a network device 110 and a terminal device 120. The network device 110 may be a device that communicates with the terminal device 120. The network device 110 may provide network coverage for a specific geographical area and may communicate with the terminal device 120 located within the coverage area. The terminal device 120 may access a network (e.g., a wireless network) via the network device 110. Optionally, the wireless communication system 100 may further include other network entities such as a network controller and a mobility management entity, which are not limited in the embodiments of the present disclosure.

It should be understood that the technical solutions of the embodiments of the present disclosure can be applied to various communication systems, for example: a 5G system or new radio (NR), a long term evolution (LTE) system, an LTE frequency division duplex (FDD) system, an LTE time division duplex (TDD) system, etc. The technical solutions provided in the present disclosure can also be applied to future communication systems, such as a sixth generation mobile communication system, or a satellite communication system, etc.

The terminal device in the embodiments of the present disclosure may also be referred to as user equipment (UE), access terminal, user unit, user station, mobile station (MS), mobile terminal (MT), remote station, remote terminal, mobile device, user terminal, terminal, wireless communication device, user agent, or user device. The terminal device in the embodiments of the present disclosure may refer to a device that provides voice and/or data connectivity to a user, and may be used to connect people, things, and machines, such as a handheld device with wireless connection function, an in-vehicle device, etc. The terminal device in the embodiments of the present disclosure may be a mobile phone, a tablet computer, a laptop computer, a personal digital assistant, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. Optionally, the terminal device may be used to act as a base station. For example, the terminal device may act as a scheduling entity that provides sidelink signals between terminal devices in vehicle-to-everything (V2X) or device-to-device (D2D) communications, etc. For instance, a cellular phone and a car communicate with each other using sidelink signals. The cellular phone and a smart home device communicate without relaying communication signals through a base station.

The network device in the embodiments of the present disclosure may be a device for communicating with a terminal device. The network device may be, for example, an access network device or a radio access network device. For instance, the network device may be a base station. A base station can broadly cover various names as follows, or be replaced with the following names: NodeB, evolved NodeB (eNB), next generation NodeB (gNB), relay station, access point (AP), transmitting and receiving point (TRP), transmitting point (TP), home base station, network controller, access node, wireless node, AP, transmission node, transceiver node, baseband unit (BBU), remote radio unit (RRU), active antenna unit (AAU), remote radio head (RRH), central unit (CU), distributed unit (DU), positioning node, etc. The base station may be a macro base station, a micro base station, a relay node, a donor node, or the like, or a combination thereof.

The wireless communication system to which the embodiments of the present disclosure can be applied is described in detail above. The air interface (Uu interface) system is an important part of the wireless communication system. With the development of technology, the industry has begun to study the application of AI/ML models in air interface systems (e.g., 5G/6G air interface systems). This research believes that for certain functions or features of the air interface, processing solutions based on AI/ML models (referred to as AI/ML processing solutions) may obtain certain performance gains compared to traditional processing solutions (i.e., non-AI/ML processing solutions). Therefore, in future air interface systems, in suitable scenarios, for a certain function or feature, an AI/ML model may be activated or selected to use the AI/ML processing solution instead of the traditional processing solution, thereby obtaining performance gains.

For example, if there is an AI/ML model for a function or feature, the network device may configure a set of AI/ML models that can be activated (such as AI/ML model 1 and AI/ML model 2 shown in FIG. 2) according to the capability of the terminal device. Then, the network device may select or activate an AI/ML model from the set of AI/ML models for the terminal device to use.

If the AI/ML models are AI/ML models specially optimized for deployment scenarios, there may be multiple AI/ML models for a function or feature, and different AI/ML models may be suitable for different deployment scenarios. When the network device detects that the working state of a certain AI/ML model is not good, the network device may instruct the terminal device to switch to another AI/ML model. This process may be referred to as model switching. For example, as the terminal device moves, the terminal device may handover from one cell to another cell. Different cells may have different conditions, so the AI/ML model originally used by the terminal device may experience performance degradation in the new cell. In this case, once the network device detects the performance degradation of the AI/ML model, it may switch the AI/ML model used by the terminal device to another AI/ML model, thereby adapting to the new cell environment.

In an air interface system, AI/ML processing solutions can be applied to the processing of physical channels (e.g., data channels at the physical layer) to improve the reception or transmission-related performance of the physical channels. For example, channel coding/channel decoding may be performed based on an AI/ML model to improve channel coding/decoding performance. For another example, signal modulation/signal demodulation may be performed based on an AI/ML model to improve the flexibility of signal modulation/demodulation.

Different physical channels correspond to different time domain resources, and the AI/ML processing solution suitable for the time domain resource (or the physical channel transmitted within the time domain resource) may also be different. In related art, AI/ML configuration information and time domain resource configuration information of a physical channel are configured separately. This configuration method easily leads to a mismatch between the AI/ML configuration information and the time domain resource of the physical channel, thereby reducing the reliability of the wireless communication system.

For example, a network device may pre-configure multiple types of time domain resource configuration information (corresponding to multiple time domain resources of a physical channel) for a terminal device based on radio resource control (RRC) signaling, and indicate the time domain resource configuration information currently used by the terminal device through downlink control information (DCI). If the time domain resource indicated by the DCI is located in the same slot as the DCI, the terminal device may not have enough time to load the AI/ML model or may only load an AI/ML model with a simple algorithm; for another example, if the time domain resource indicated by the DCI is located in a different slot than the DCI, the terminal device may load more or more complex AI/ML models, thereby improving the processing performance of the physical channel. It can be seen that different time domain resources may be suitable for different AI/ML processing solutions. In the above scenario, if the network device instructs the terminal device to use an inappropriate AI/ML processing solution, the terminal device may not have enough time to process the physical channel within the limited time, thereby reducing the reliability of the wireless communication system.

Therefore, how to ensure the adaptability between the AI/ML configuration information and the time domain resource of the physical channel, thereby improving the reliability of the wireless communication system, is a problem to be solved. To address this problem, the embodiments of the present disclosure introduce a correspondence between time domain resource configuration information and AI/ML configuration information into the resource configuration information of the physical channel, thereby binding the AI/ML configuration information to a specific time domain resource. Based on this binding relationship, a mismatch between the time domain resource of the physical channel and the AI/ML processing solution can be avoided, thereby improving the reliability of the wireless communication system.

The embodiments of the present disclosure are described in detail below with examples.

FIG. 3 is a schematic flowchart of a resource configuration method provided by an embodiment of the present disclosure. The method of FIG. 3 may be executed by a terminal device and a network device. The terminal device may be, for example, the terminal device 120 mentioned above, and the network device may be, for example, the network device 110 mentioned above.

Referring to FIG. 3, in step S310, a terminal device receives resource configuration information sent by a network device. The resource configuration information may be resource configuration information of a first physical channel. The first physical channel mentioned here may be any type of physical channel suitable for processing using an AI/ML processing solution. For example, the first physical channel is a data channel, such as a physical downlink shared channel (PDSCH), a physical uplink shared channel (PUSCH), or a physical sidelink shared channel (PSSCH).

The resource configuration information can be used to configure the time domain resource of the first physical channel. Therefore, the resource configuration information may also be referred to as time domain resource configuration information or time domain resource allocation information of the first physical channel. The resource configuration information may be, for example, RRC configuration information or a system information block (SIB).

The resource configuration information may include first information. The first information may be one of multiple types of time domain resource configuration information included in the resource configuration information. The first information may be used to indicate a first time domain resource (used to carry the first physical channel). For ease of description, the first information is hereinafter referred to as first time domain resource configuration information. It should be understood that in the embodiments of the present disclosure, the first information and the first time domain resource configuration information may be interchanged wherein there is no conflict.

The embodiments of the present disclosure do not specifically limit the content of the first time domain resource configuration information, as long as it can indicate the time domain resource of the first physical channel. In some implementations, the first time domain resource configuration information may include time domain position information and/or time domain length information of the first time domain resource.

The time domain position information of the first time domain resource may include one or more of: a starting slot of the first time domain resource, or a starting symbol of the first time domain resource.

The time domain length information of the first time domain resource may include one or more of: a number of slots occupied by the first time domain resource, or a number of symbols occupied by the first time domain resource.

Taking PDSCH or PUSCH as an example, the first time domain resource configuration information may include one or more of the following three parameters: parameter K, parameter S, and parameter L. Parameter K indicates a slot offset from a physical downlink control channel (PDCCH) to the PDSCH/PUSCH scheduled by the PDCCH. Parameter S indicates a starting symbol of the PDSCH/PUSCH in the scheduled slot. Parameter L indicates the length (or number of symbols) of the PDSCH/PUSCH. Parameter K and parameter S correspond to the time domain position information described above. Parameter L corresponds to the time domain length information described above.

In addition to including the first time domain resource configuration information, the resource configuration information may further include second information corresponding to the first time domain resource configuration information. The second information is (or is used to indicate) AI/ML configuration information associated with the first time domain resource. For ease of understanding, the second information is hereinafter referred to as AI/ML configuration information. It should be understood that in the embodiments of the present disclosure, the second information and the AI/ML configuration information may be interchanged wherein there is no conflict.

In some implementations, the second information and the first information may be carried in the same resource configuration information.

The resource configuration information including the AI/ML configuration information corresponding to the first time domain resource configuration information means that the resource configuration information not only configures the first time domain resource configuration information, but also configures the correspondence between the first time domain resource configuration information and the AI/ML configuration information. For example, the AI/ML configuration information may be included in the first time domain resource configuration information, i.e., as part of the first time domain resource configuration information.

In some implementations, the correspondence between the first time domain resource configuration information and the AI/ML configuration information may be understood as the AI/ML configuration information corresponding to the first time domain resource configured by the first time domain resource configuration information, or the AI/ML configuration information corresponding to the first physical channel transmitted within the first time domain resource. That is, based on the above correspondence, it can be determined that the first physical channel transmitted within the first time domain resource supports the AI/ML function or AI model indicated by the AI/ML configuration information. Establishing a correspondence between the first time domain resource configuration information and the AI/ML configuration information is equivalent to binding the AI/ML configuration information to a specific time domain resource, which can avoid a mismatch between the AI/ML configuration information and the time domain resource, thereby improving the reliability of the AI/ML-based wireless communication system.

The embodiments of the present disclosure do not specifically limit the content of the AI/ML configuration information. For example, the AI/ML configuration information may configure or indicate the AI/ML function supported by the first time domain resource. For another example, the AI/ML configuration information may configure or indicate the AI/ML model supported by the first time domain resource. For another example, the AI/ML configuration information may simultaneously configure or indicate the AI/ML function and the AI/ML model supported by the first time domain resource. The content of the AI/ML configuration information is described in more detail below with specific examples.

### Example 1: AI/ML configuration information indicates the AI/ML function supported by the first time domain resource

The AI/ML configuration information may directly indicate the AI/ML functions supported or not supported by the first time domain resource. Alternatively, the AI/ML configuration information may indicate the AI/ML functions supported or not supported by the first time domain resource via identifiers (IDs) of the AI/ML functions. For example, the AI/ML configuration information may include one or more of: an identifier of an AI/ML function supported by the first time domain resource, or an identifier of an AI/ML function not supported by the first time domain resource. Indicating AI/ML functions based on identifiers can reduce the configuration complexity of the time domain resource configuration information.

An example is described below with reference to Table 1, taking the first physical channel as PDSCH or PUSCH. In the following example, the time domain resource configuration information may include the following three parameters: a slot offset from the PDCCH to the PDSCH/PUSCH scheduled by the PDCCH (parameter K), a starting symbol of the PDSCH/PUSCH in the scheduled slot (parameter S), and the length or number of symbols of the PDSCH/PUSCH (parameter L). Further, in the following example, each piece of time domain resource configuration information includes corresponding AI/ML configuration information. The AI/ML configuration information may be used to indicate which AI/ML functions can be supported when transmitting the PDSCH/PUSCH using the time domain resource configured by the time domain resource configuration information.

Referring to Table 1, the network device configures eight candidate time domain resources for the terminal device, and configures supported AI/ML functions for each time domain resource. The example of Table 1 mainly determines whether to support a certain AI/ML function based on the distance between the PDSCH/PUSCH and the PDCCH. For example, because loading some relatively complex AI/ML algorithms takes a long time, for a PDSCH/PUSCH farther from the PDCCH, more functions can be processed using AI/ML algorithms, while for a PDSCH/PUSCH closer to the PDCCH, only fewer functions can be processed using AI/ML algorithms.

For example, for time domain resource configurations 1 and 3, since the PDSCH/PUSCH and the PDCCH are located in the same slot (i.e., K=0) and the PDSCH/PUSCH starts transmission from the beginning of the slot (i.e., S=0), the algorithms of functions 1, 2, and 3 cannot be loaded in time, so functions 1, 2, and 3 are all configured as not supported.

For another example, for time domain resource configurations 5 and 7, the PDSCH/PUSCH and the PDCCH are located in the same slot (i.e., K=0) but the PDSCH/PUSCH starts transmission from the middle of the slot (e.g., S=7), then the algorithm of function 1 can be loaded. Therefore, in time domain resource configurations 5 and 7, function 1 is configured as supported, and functions 2 and 3 are configured as not supported.

For another example, for time domain resource configurations 2 and 4, since the PDSCH/PUSCH is located in the next slot of the slot wherein the PDCCH is located (i.e., K=1) and the PDSCH/PUSCH starts transmission from the beginning of the slot (i.e., S=0), the algorithms of functions 1 and 2 can be loaded. Therefore, in these two time domain resource configurations, functions 1 and 2 are configured as supported, and function 3 is configured as not supported.

For another example, for time domain resource configurations 6 and 8, since the PDSCH/PUSCH is located in the next slot of the slot wherein the PDCCH is located (i.e., K=1) and the PDSCH/PUSCH starts transmission from the middle of the slot (e.g., S=7), the algorithms of functions 1, 2, and 3 can all be loaded. Therefore, in time domain resource configurations 6 and 8, functions 1, 2, and 3 are all configured as supported.

**Table 1: Time domain resource configuration information (including configuration information of AI/ML functions)**

| Configuration No. | *K* | S | *L* | Configuration information of AI/ML functions |
|---|---|---|---|---|
| 1 | 0 | 0 | 7 | Feature 1: Not supported |
| | | | | Feature 2: Not supported |
| | | | | Feature 3: Not supported |
| 2 | 1 | 0 | 7 | Feature 1: Support |
| | | | | Feature 2: Support |
| | | | | Feature 3: Not supported |
| 3 | 0 | 0 | 14 | Feature 1: Not supported |
| | | | | Feature 2: Not supported |
| | | | | Feature 3: Not supported |
| 4 | 1 | 0 | 14 | Feature 1: Support |
| | | | | Feature 2: Support |
| | | | | Feature 3: Not supported |
| 5 | 0 | 7 | 4 | Feature 1: Support |
| | | | | Feature 2: Not supported |
| | | | | Feature 3: Not supported |
| 6 | 1 | 7 | 4 | Feature 1: Support |
| | | | | Feature 2: Support |
| | | | | Feature 3: Support |
| 7 | 0 | 7 | 7 | Feature 1: Support |
| | | | | Feature 2: Not supported |
| | | | | Feature 3: Not supported |
| 8 | 1 | 7 | 7 | Feature 1: Support |
| | | | | Feature 2: Support |
| | | | | Feature 3: Support |

The above solution binds a specific time domain resource with the AI/ML functions supported by that specific time domain resource, which can ensure the adaptability between the AI/ML configuration information and the time domain resource of the first physical channel. Based on this solution, the terminal device can use AI/ML functions only in suitable scenarios, thereby ensuring the reliability of the wireless communication system.

### Example 2: AI/ML configuration information indicates the AI/ML model supported by the first time domain resource

It should be understood that for the same AI/ML function, the AI/ML configuration information may indicate only one AI/ML model corresponding to the AI/ML function, or may indicate multiple AI/ML models corresponding to the AI/ML function (i.e., any one of the multiple AI/ML models can be used to implement the corresponding AI/ML function). In some implementations, if one AI/ML function corresponds to multiple AI/ML models, the multiple AI/ML models may include a default AI/ML model. The so-called default AI/ML model refers to an AI/ML model used by default. For example, if the network device activates the AI/ML function but does not indicate the AI/ML model corresponding to the AI/ML function, the terminal device may use the default AI/ML model to process the first physical channel.

The AI/ML configuration information may directly indicate the AI/ML models supported or not supported by the first time domain resource. Alternatively, the AI/ML configuration information may indicate the AI/ML models supported or not supported by the first time domain resource via identifiers of the AI/ML models. For example, the AI/ML configuration information may include one or more of: an identifier of an AI/ML model supported by the first time domain resource, or an identifier of an AI/ML model not supported by the first time domain resource. Indicating AI/ML models based on identifiers can reduce the configuration complexity of the time domain resource configuration information.

An example is described below with reference to Table 2, taking the first physical channel as PDSCH or PUSCH. In the following example, the time domain resource configuration information may include the following three parameters: a slot offset from the PDCCH to the PDSCH/PUSCH scheduled by the PDCCH (parameter K), a starting symbol of the PDSCH/PUSCH in the scheduled slot (parameter S), and the length or number of symbols of the PDSCH/PUSCH (parameter L). Further, in the following example, the time domain resource configuration information includes corresponding AI/ML configuration information. The AI/ML configuration information may indicate which AI/ML functions can be supported when transmitting the PDSCH/PUSCH using the time domain resource. In addition, the AI/ML configuration information may also indicate the AI model corresponding to the AI/ML function.

Referring to Table 2, the network device configures eight candidate time domain resources for the terminal device, and configures supported AI/ML functions and AI/ML models for each time domain resource. The example of Table 2 mainly determines whether to support a certain AI/ML function based on the distance between the PDSCH/PUSCH and the PDCCH. For example, because loading some relatively complex AI/ML algorithms takes a long time, for a PDSCH/PUSCH farther from the PDCCH, more functions can be processed using AI/ML algorithms, while for a PDSCH/PUSCH closer to the PDCCH, only fewer functions can be processed using AI/ML algorithms.

For example, for time domain resource configurations 1 and 3, since the PDSCH/PUSCH and the PDCCH are located in the same slot (i.e., K=0) and the PDSCH/PUSCH starts transmission from the beginning of the slot (i.e., S=0), the algorithms of functions 1, 2, and 3 cannot be loaded in time, so functions 1, 2, and 3 are all configured as not supported.

For another example, for time domain resource configurations 5 and 7, the PDSCH/PUSCH and the PDCCH are located in the same slot (i.e., K=0) but the PDSCH/PUSCH starts transmission from the middle of the slot (e.g., S=7), then the algorithm of function 1 can be loaded. Therefore, in these two time domain resource configurations, function 1 is configured as supported, and AI/ML model 1-1 is used. Functions 2 and 3 are configured as not supported.

For another example, for time domain resource configurations 2 and 4, since the PDSCH/PUSCH is located in the next slot of the slot wherein the PDCCH is located (i.e., K=1) and the PDSCH/PUSCH starts transmission from the beginning of the slot (i.e., S=0), the algorithms of functions 1 and 2 can be loaded. Therefore, in these two time domain resource configurations, functions 1 and 2 are configured as supported, and AI/ML model 1-1 and AI/ML model 2-1 are used respectively. Function 3 is configured as not supported.

For another example, for time domain resource configurations 6 and 8, since the PDSCH/PUSCH is located in the next slot of the slot wherein the PDCCH is located (i.e., K=1) and the PDSCH/PUSCH starts transmission from the middle of the slot (e.g., S=7), the algorithms of functions 1, 2, and 3 can all be loaded. Therefore, in these two time domain resource configurations, functions 1, 2, and 3 are all configured as supported, and AI/ML model 1-1, AI/ML model 2-1, and AI/ML model 3-2 are used respectively.

**Table 2: Time domain resource configuration information (including configuration information of AI/ML functions and AI/ML models)**

| Configuration No. | K | S | L | Configuration information for AI/ML functions | Configuration information of AI/ML models |
|---|---|---|---|---|---|
| 1 | 0 | 0 | 7 | Feature 1: Not supported | |
| | | | | Feature 2: Not supported | |
| | | | | Feature 3: Not supported | |
| 2 | 1 | 0 | 7 | Feature 1: Support | Model used for AI Function 1: Model 1-1 |
| | | | | Feature 2: Support | |
| | | | | Feature 3: Not supported | Model used for AI Function 2: Model 2-1 |
| 3 | 0 | 0 | 14 | Feature 1: Not supported | |
| | | | | Feature 2: Not supported | |
| | | | | Feature 3: Not supported | |
| 4 | 1 | 0 | 14 | Feature 1: Support | Model used for AI Function 1: Model 1-1 |
| | | | | Feature 2: Support | |
| | | | | Feature 3: Not supported | Model used for AI Function 2: Model 2-1 |
| 5 | 0 | 7 | 4 | Feature 1: Support | Model used for AI Function 1: Model 1-1 |
| | | | | Feature 2: Not supported | |
| | | | | Feature 3: Not supported | |
| 6 | 1 | 7 | 4 | Feature 1: Support | Model used for AI Function 1: Model 1-1 |
| | | | | Feature 2: Support | |
| | | | | Feature 3: Support | Model used for AI Function 2: Model 2-2 |
| | | | | | Model used for AI Function 3: Model 3-2 |
| 7 | 0 | 7 | 7 | Feature 1: Support | Model used for AI Function 1: Model 1-1 |
| | | | | Feature 2: Not supported | |
| | | | | Feature 3: Not supported | |
| 8 | 1 | 7 | 7 | Feature 1: Support | Model used for AI Function 1: Model 1-1 |
| | | | | Feature 2: Support | |
| | | | | Feature 3: Support | Model used for AI Function 2: Model 2-2 |
| | | | | | Model used for AI Function 3: Model 3-2 |

The above solution binds a specific time domain resource with the AI/ML functions and AI/ML models supported by that specific time domain resource, which can ensure the adaptability between the AI/ML configuration information and the time domain resource of the first physical channel. Based on this solution, the terminal device can use AI/ML functions and AI/ML models only in suitable scenarios, thereby ensuring the reliability of the wireless communication system.

The content of the resource configuration information has been described in detail above. How to schedule the time domain resource configured by the resource configuration information (and the AI/ML configuration information corresponding to the time domain resource) is described in detail below.

In some implementations, the method of FIG. 3 may further include: the terminal device receives first control information. The first control information may be, for example, DCI, or media access control control element (MAC CE), or sidelink control information (SCI). If the first control information is DCI or MAC CE, the first control information may be sent by the network device. If the first control information is SCI, the first control information may be sent by another terminal device.

The first control information may include first indication information (for example, it may be a time domain resource indicator). The first indication information may be used to indicate the first time domain resource configuration information mentioned above. The first indication information may indicate the currently used first time domain resource configuration information from among multiple types of time domain resource configuration information configured by the resource configuration information. As mentioned above, the first time domain resource configuration information has a correspondence with the AI/ML configuration information. Therefore, if the first indication information indicates the first time domain resource configuration information, it can be considered that the network device has selected the AI/ML configuration information corresponding to the first time domain resource configuration information. It can be seen that the embodiments of the present disclosure do not need to set a separate field for indicating AI/ML configuration information in the first control information, thereby significantly reducing the signaling overhead required to transmit the first control information.

After receiving the first control information, the terminal device may determine the first time domain resource according to the first time domain resource configuration information indicated by the first control information, and receive or send the first physical channel in the first time domain resource according to the AI/ML configuration information. In other words, the terminal device may determine the first time domain resource according to the time domain position information and time domain length information of the first time domain resource, and receive or send the first physical channel in the first time domain resource according to the AI/ML configuration information associated with the first time domain resource. For example, the terminal device may first determine, based on the AI/ML configuration information, the AI/ML function and/or AI/ML model to be used by the terminal device; then, the terminal device may receive or send the first physical channel based on the AI/ML function and/or AI/ML model. If the AI/ML configuration information indicates that the first physical channel in the first time domain resource does not support AI/ML processing, the terminal device may receive or send the first physical channel using a traditional solution.

As mentioned above, the AI/ML configuration information may indicate multiple AI/ML models corresponding to the same AI/ML function. If the AI/ML configuration information indicates (or configures) multiple AI/ML models, then in order for the terminal device to know which AI/ML model among the multiple AI/ML models to use to process the first physical channel, the first control information may further carry second indication information. The second indication information may be used to indicate at least one AI/ML model (e.g., one AI/ML model) among the multiple AI/ML models. Introducing the second indication information into the first control information allows the network device to schedule the terminal device to use an appropriate AI/ML model to process the first physical channel, thereby improving communication reliability.

To save signaling overhead, in some implementations, a default AI/ML model may be set among the multiple AI/ML models. The default AI/ML model may be used when the first control information does not include the second indication information. For example, if the AI/ML configuration information indicates multiple AI/ML models, but the terminal device does not receive the second indication information from the first control information, the terminal device may use the default AI/ML model to process the first physical channel.

The embodiments of the present disclosure are described in more detail below using the first control information as DCI, the first indication information as a time domain resource indicator in DCI, and the second indication information as an AI/ML model indicator. It should be noted that the following examples are only intended to help those skilled in the art understand the embodiments of the present disclosure, and are not intended to limit the embodiments of the present disclosure to the specific numerical values or specific scenarios illustrated. Based on the following examples, those skilled in the art can obviously make various equivalent modifications or changes, and such modifications or changes also fall within the scope of the embodiments of the present disclosure.

### Example 1: Using DCI to schedule time domain resources and AI/ML configuration information configured by resource configuration information

The resource configuration information (e.g., RRC configuration information) may include multiple pieces of time domain resource configuration information. In this case, the time domain resource indicator in DCI can be used to indicate one piece of time domain resource configuration information from the multiple pieces of time domain resource configuration information, thereby scheduling the corresponding time domain resource while activating the AI/ML function bound to the time domain resource. As shown in Table 3, each piece of time domain resource configuration information corresponds to one value of the time domain resource indicator in DCI.

In the example of Table 3, when the value of the time domain resource indicator in DCI = 000, the DCI schedules time domain resource No. 1 (K=0, S=0, L=7) for the PDSCH. This time domain resource occupies the first half of the slot wherein the PDCCH is located (slot N) (as shown in FIG. 4), i.e., the PDSCH and the PDCCH are transmitted almost simultaneously. Since functions 1, 2, and 3 in time domain resource No. 1 are all configured as not supported, none of the AI/ML algorithms for functions 1, 2, and 3 need to be used under extremely short latency.

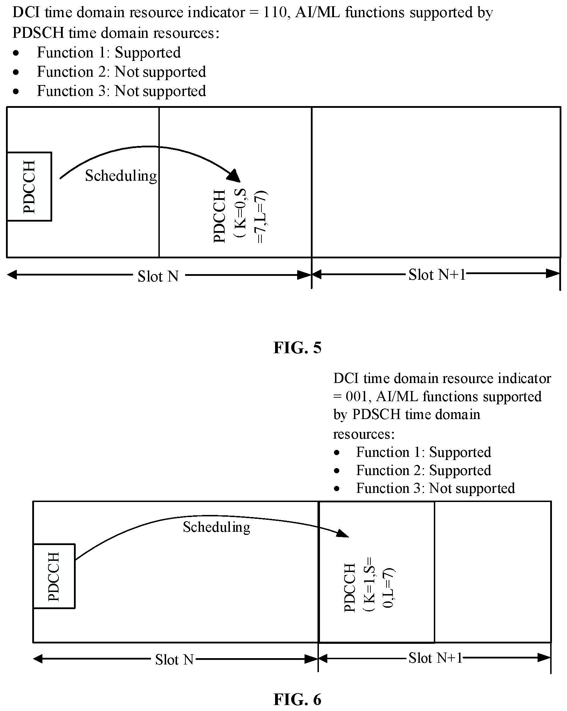

When the value of the time domain resource indicator in DCI = 110, the DCI schedules time domain resource No. 7 (K=0, S=7, L=7) for the PDSCH. This time domain resource occupies the second half of the slot wherein the PDCCH is located (slot N) (as shown in FIG. 5), i.e., the PDSCH is transmitted slightly later after the PDCCH. Since function 1 in time domain resource No. 7 is configured as supported, and functions 2 and 3 are configured as not supported, only the AI/ML algorithm of function 1 is used under short latency.

When the value of the time domain resource indicator in DCI = 001, the DCI schedules time domain resource No. 2 (K=1, S=0, L=7) for the PDSCH. This time domain resource occupies the first half of the next slot (slot N+1) of the slot wherein the PDCCH is located (as shown in FIG. 6), i.e., the PDSCH is transmitted one slot period after the PDCCH. Since functions 1 and 2 in time domain resource No. 2 are configured as supported, and function 3 is configured as not supported, the AI/ML algorithms of functions 1 and 2 can be used under a slightly longer latency.

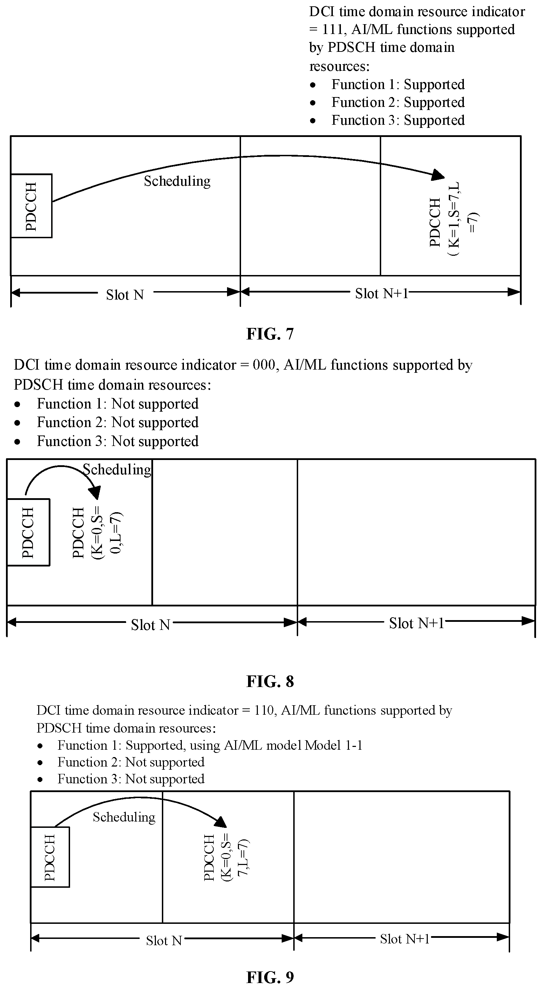

When the value of the time domain resource indicator in DCI = 111, the DCI schedules time domain resource No. 8 (K=1, S=7, L=7) for the PDSCH. This time domain resource occupies the second half of the next slot (slot N+1) of the slot wherein the PDCCH is located (as shown in FIG. 7), i.e., the PDSCH is transmitted later after the PDCCH. Since functions 1, 2, and 3 in time domain resource No. 8 are all configured as supported, the AI/ML algorithms of functions 1, 2, and 3 can be used under a longer latency.

**Table 3: Correspondence between time domain resource indicator in DCI and time domain resource configuration (including configuration information for AI/ML functions)**

| Time domain resource indicator | Configuration No. | K | S | L | Configuration information of AI/ML functions |
|---|---|---|---|---|---|
| 000 | 1 | 0 | 0 | 7 | Feature 1: Not supported |
| | | | | | Feature 2: Not supported |
| | | | | | Feature 3: Not supported |
| 001 | 2 | 1 | 0 | 7 | Feature 1: Support |
| | | | | | Feature 2: Support |
| | | | | | Feature 3: Not supported |
| 010 | 3 | 0 | 0 | 14 | Feature 1: Not supported |
| | | | | | Feature 2: Not supported |
| | | | | | Feature 3: Not supported |
| 011 | 4 | 1 | 0 | 14 | Feature 1: Support |
| | | | | | Feature 2: Support |
| | | | | | Feature 3: Not supported |
| 100 | 5 | 0 | 7 | 4 | Feature 1: Support |
| | | | | | Feature 2: Not supported |
| | | | | | Feature 3: Not supported |
| 101 | 6 | 1 | 7 | 4 | Feature 1: Support |
| | | | | | Feature 2: Support |
| | | | | | Feature 3: Support |
| 110 | 7 | 0 | 7 | 7 | Feature 1: Support |
| | | | | | Feature 2: Not supported |
| | | | | | Feature 3: Not supported |
| 111 | 8 | 1 | 7 | 7 | Feature 1: Support |
| | | | | | Feature 2: Support |
| | | | | | Feature 3: Support |

If the time domain resource configuration information includes not only configuration information for AI/ML functions but also configuration information for AI/ML models (as shown in Table 4), then the time domain resource indicator can be used to indicate one piece of time domain resource configuration information from the multiple pieces of time domain resource configuration information, thereby scheduling the corresponding time domain resource while activating the AI/ML function bound to this time domain resource and specifying the AI/ML model for this AI/ML function.

In the example of Table 4, when the value of the time domain resource indicator in DCI = 000, the DCI schedules time domain resource No. 1 (K=0, S=0, L=7) for the PDSCH. This time domain resource occupies the first half of the slot wherein the PDCCH is located (slot N) (as shown in FIG. 8), i.e., the PDSCH and the PDCCH are transmitted almost simultaneously. Since functions 1, 2, and 3 in time domain resource No. 1 are all configured as not supported, none of the AI/ML algorithms for functions 1, 2, and 3 need to be used under extremely short latency.

When the value of the time domain resource indicator in DCI = 110, the DCI schedules time domain resource No. 7 (K=0, S=7, L=7) for the PDSCH. This time domain resource occupies the second half of the slot wherein the PDCCH is located (slot N) (as shown in FIG. 9), i.e., the PDSCH is transmitted slightly later after the PDCCH. Since function 1 in time domain resource No. 7 is configured as supported, using Model 1-1 for processing function 1, and functions 2 and 3 are configured as not supported, only the AI/ML algorithm of function 1 is used under short latency.

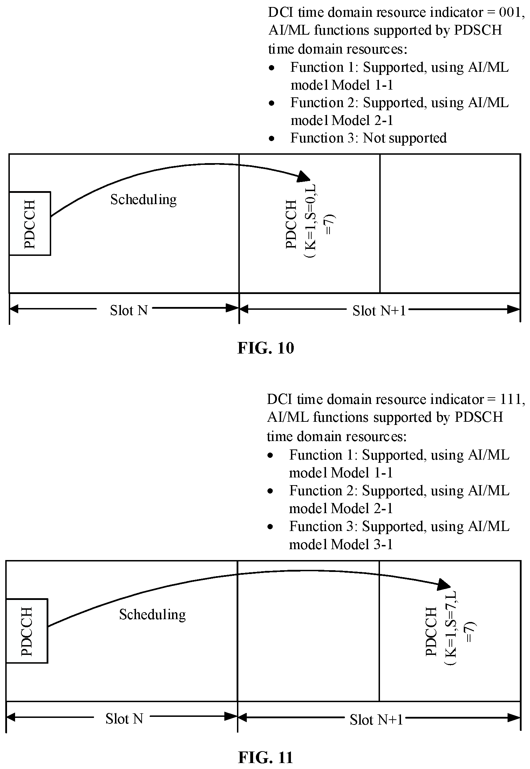

When the value of the time domain resource indicator in DCI = 001, the DCI schedules time domain resource No. 2 (K=1, S=0, L=7) for the PDSCH. This time domain resource occupies the first half of the next slot (slot N+1) of the slot wherein the PDCCH is located (as shown in FIG. 10), i.e., the PDSCH is transmitted one slot period after the PDCCH. Since functions 1 and 2 in time domain resource No. 2 are configured as supported, using Model 1-1 for processing function 1 and Model 2-1 for processing function 2, and function 3 is configured as not supported, the AI/ML algorithms of functions 1 and 2 can be used under a slightly longer latency.

When the value of the time domain resource indicator in DCI = 111, the DCI schedules time domain resource No. 8 (K=1, S=7, L=7) for the PDSCH. This time domain resource occupies the second half of the next slot (slot N+1) of the slot wherein the PDCCH is located (as shown in FIG. 11), i.e., the PDSCH is transmitted later after the PDCCH. Since functions 1, 2, and 3 in time domain resource No. 8 are all configured as supported, using Model 1-1 for processing function 1, Model 2-1 for processing function 2, and Model 3-2 for processing function 3, the AI/ML algorithms of functions 1, 2, and 3 can be used under a longer latency.

**Table 4: Time domain resource configuration (including configuration information for AI/ML functions and configuration information for AI/ML models)**

| Time domain resource indicator | Configuration No. | K | S | L | Configuration information for AI/ML functions | Configuration information of AI/ML models |
|---|---|---|---|---|---|---|
| 000 | 1 | 0 | 0 | 7 | Feature 1: Not supported | |
| | | | | | Feature 2: Not supported | |
| | | | | | Feature 3: Not supported | |
| 001 | 2 | 1 | 0 | 7 | Feature 1: Support | Model used for AI Function 1: Model 1-1 |
| | | | | | Feature 2: Support | |
| | | | | | Feature 3: Not supported | Model used for AI Function 2: Model 2-1 |
| 010 | 3 | 0 | 0 | 14 | Feature 1: Not supported | |
| | | | | | Feature 2: Not supported | |
| | | | | | Feature 3: Not supported | |
| 011 | 4 | 1 | 0 | 14 | Feature 1: Support | Model used for AI Function 1: Model 1-1 |
| | | | | | Feature 2: Support | |
| | | | | | Feature 3: Not supported | Model used for AI Function 2: Model 2-1 |
| 100 | 5 | 0 | 7 | 4 | Feature 1: Support | Model used for AI Function 1: |
| | | | | | Feature 2: Not supported | Model 1-1 |
| | | | | | Feature 3: Not supported | |
| 101 | 6 | 1 | 7 | 4 | Feature 1: Support | Model used for AI Function 1: Model 1-1 |
| | | | | | Feature 2: Support | |
| | | | | | Feature 3: Support | Model used for AI Function 2: Model 2-2 |
| | | | | | | Model used for AI Function 3: Model 3-2 |
| 110 | 7 | 0 | 7 | 7 | Feature 1: Support | Model used for AI Function 1: Model 1-1 |
| | | | | | Feature 2: Not supported | |
| | | | | | Feature 3: Not supported | |
| 111 | 8 | 1 | 7 | 7 | Feature 1: Support | Model used for AI Function 1: Model 1-1 |
| | | | | | Feature 2: Support | |
| | | | | | Feature 3: Support | Model used for AI Function 2: Model 2-2 |
| | | | | | | Model used for AI Function 3: Model 3-2 |

In Example 1, the supported AI/ML functions and models are bound to specific time domain resources, and the specific time domain resources are indicated by the time domain resource indicator in DCI. In this way, the time domain resource indicator can activate the configuration information of the AI/ML functions and models bound to the time domain resource, thereby significantly saving DCI overhead. At the same time, the above example can ensure the adaptability between the AI/ML configuration information and the channel transmission resource, thereby ensuring the reliability of the wireless communication system.

### Example 2: Using DCI to activate one AI/ML model from among multiple AI/ML models bound to a time domain resource

**Table 5: Time domain resource configuration (for one AI/ML function, including configuration information of multiple AI/ML models)**

| DCI Time Domain Resource Indicator | Configuration No. | K | S | L | Configuration information for AI/ML functions | Configuration information of AI/ML models |
|---|---|---|---|---|---|---|
| 000 | 1 | 0 | 0 | 7 | Feature 1: Not supported | |
| | | | | | Feature 2: Not supported | |
| | | | | | Feature 3: Not supported | |
| 001 | 2 | 1 | 0 | 7 | Feature 1: Support | Models used for AI Function 1: Model 1-1 (default Model), Model 1-2 |
| | | | | | Feature 2: Support | |
| | | | | | Feature 3: Not supported | |
| | | | | | | Models used for AI Function 2: Model 2-1 (default Model), Model 2-2, Model 2-3 |
| 010 | 3 | 0 | 0 | 14 | Feature 1: Not supported | |
| | | | | | Feature 2: Not supported | |
| | | | | | Feature 3: Not supported | |
| 011 | 4 | 1 | 0 | 14 | Feature 1: Support | Models used for AI Function 1: Model 1-1 (default Model), Model 1-2 Models used for AI Function 2: Model 2-1 (default Model), Model 2-2, Model 2-3 |
| | | | | | Feature 2: Support | |
| | | | | | Feature 3: Not supported | |
| 100 | 5 | 0 | 7 | 4 | Feature 1: Support | Models used for AI function 1: Model 1-1 (default Model), Model 1-2 |
| | | | | | Feature 2: Not supported | |
| | | | | | Feature 3: Not supported | |
| 101 | 6 | 1 | 7 | 4 | Feature 1: Support | Models used for AI Function 1: Model 1-1 (default Model), Model 1-2 |
| | | | | | Feature 2: Support | |
| | | | | | Feature 3: Support | |
| | | | | | | Models used for AI Function 2: Model 2-1 (default Model), Model 2-2, Model 2-3 |
| | | | | | | Models used for AI Function 3: Model 3-2 (default Model), Model 3-2, Model 3-3 |
| 110 | 7 | 0 | 7 | 7 | Feature 1: Support | Models used for AI Function 1: Model 1-1 (default Model), Model 1-2 |
| | | | | | Feature 2: Not supported | |
| | | | | | Feature 3: Not supported | |
| 111 | 8 | 1 | 7 | 7 | Feature 1: Support | Models used for AI Function 1: Model 1-1 (default Model), Model 1-2 |
| | | | | | Feature 2: Support | |
| | | | | | Feature 3: Support | |
| | | | | | | Models used for AI Function 2: Model 2-1 (default Model), Model 2-2, Model 2-3 |
| | | | | | | Models used for AI Function 3: Model 3-2 (default Model), Model 3-2, Model 3-3 |

As shown in Table 5, multiple AI/ML models for one AI/ML function may be configured in the time domain resource configuration information. Then, one AI/ML model may be activated from these AI/ML models via the AI/ML model indicator in DCI. In the scenario wherein multiple AI/ML models are configured for one AI/ML function, a default AI/ML model may be configured. When the DCI does not include the AI/ML model indicator, the default AI/ML model may be automatically activated.

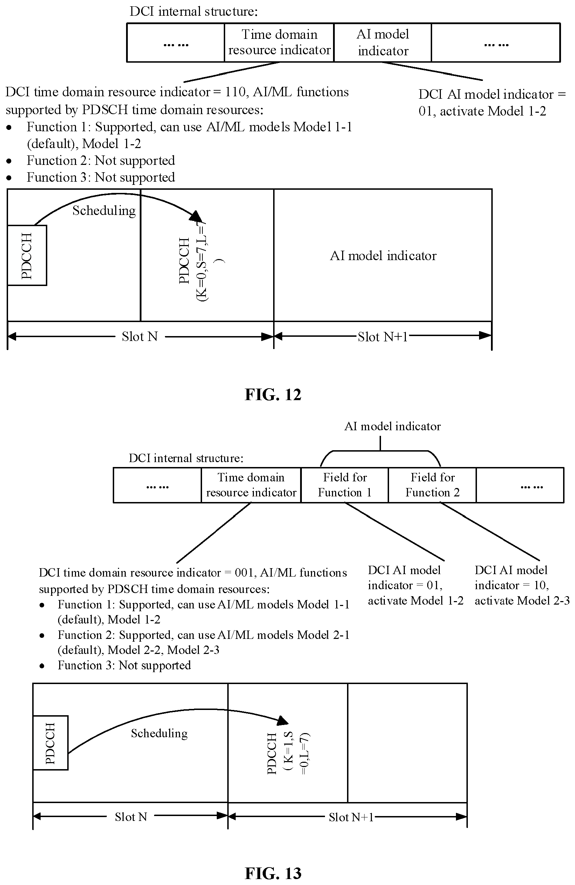

According to the configuration in Table 5, when the value of the time domain resource indicator in DCI = 110, the DCI schedules time domain resource No. 7 (K=0, S=7, L=7) for the PDSCH. In this time domain resource, function 1 is configured as supported, and Model 1-1 and Model 1-2 may be used for processing function 1, wherein Model 1-1 is the default model. Functions 2 and 3 are configured as not supported. The DCI may include a second indicator (AI model indicator). As shown in FIG. 12, the value of this indicator = 01, thus activating Model 1-2 for AI/ML function 1. If the DCI does not have the AI model indicator, the default model Model 1-1 is automatically activated.

According to the configuration in Table 5, when the value of the time domain resource indicator in DCI = 001, the DCI schedules time domain resource No. 2 (K=1, S=0, L=7) for the PDSCH. In this time domain resource, functions 1 and 2 are configured as supported. Model 1-1 and Model 1-2 may be used for processing function 1, wherein Model 1-1 is the default model; Model 2-1, Model 2-2, and Model 2-3 may be used for processing function 2, wherein Model 2-1 is the default model. Function 3 is configured as not supported. The DCI may include a second indicator (AI model indicator). As shown in FIG. 13, the field for AI/ML function 1 in this indicator has a value = 01, thus activating Model 1-2 for AI/ML function 1; the field for AI/ML function 2 in this indicator has a value = 10, thus activating Model 2-3 for AI/ML function 2. If the DCI does not have the AI model indicator, the default model Model 1-1 is automatically activated for AI/ML function 1, and the default model Model 2-1 is automatically activated for AI/ML function 2.

In Example 2, within one time domain resource, multiple AI/ML models are configured for one AI/ML function, and one is selected via DCI, thereby providing greater flexibility in AI/ML model selection and thus achieving better wireless transmission performance. At the same time, configuring a default AI/ML model among the multiple AI/ML models can also omit the AI/ML model indicator in DCI and automatically activate the default model, thereby saving DCI overhead.

In the above description, the AI/ML configuration information includes information related to AI/ML functions and/or AI/ML models. In addition, in other implementations, the AI/ML configuration information may also include an identifier (or index) of the AI/ML configuration information. The identifier of the AI/ML configuration information may be used to identify or index independently configured AI/ML configuration information. That is, based on the identifier of the AI/ML configuration information, by looking up the independently configured AI/ML configuration information, the corresponding AI/ML function and/or AI/ML model can be obtained. This implementation increases the flexibility of AI/ML configuration and avoids repeatedly configuring the same AI/ML configuration information in multiple pieces of time domain resource configuration information, thereby saving signaling overhead caused by adding AI/ML configuration information to time domain configuration information. This implementation is described in detail below with two more specific examples.

### Example 1

In Example 1, first, configuration information of AI/ML functions may be separately configured for the terminal device. Table 6 shows an example of the configuration information of AI/ML functions. It can be seen from Table 6 that the configuration information of AI/ML functions includes identifiers corresponding to the configuration information of each AI function.

**Table 6: Configuration information of AI/ML functions**

| Identifier | Configuration information of AI/ML functions |
|---|---|
| 1 | Feature 1: Not supported |
| | Feature 2: Not supported |
| | Feature 3: Not supported |
| 2 | Feature 1: Support |
| | Feature 2: Not supported |
| | Feature 3: Not supported |
| 3 | Feature 1: Support |
| | Feature 2: Support |
| | Feature 3: Not supported |
| 4 | Feature 1: Support |
| | Feature 2: Support |
| | Feature 3: Support |

After separately configuring the above configuration information of AI/ML functions, only the identifier of the AI/ML function configuration information may be included in the time domain resource configuration information, thereby conveniently indicating the correspondence between the time domain resource and the AI functions. Table 7 shows an example.

**Table 7: Time domain resource configuration information (including configuration identifier of AI/ML functions)**

| Configuration No. | K | S | L | Configuration Identifier of AI/ML Function |
|---|---|---|---|---|
| 1 | 0 | 0 | 7 | 1 |
| 2 | 1 | 0 | 7 | 3 |
| 3 | 0 | 0 | 14 | 1 |
| 4 | 1 | 0 | 14 | 3 |
| 5 | 0 | 7 | 4 | 2 |
| 6 | 1 | 7 | 4 | 4 |
| 7 | 0 | 7 | 7 | 2 |
| 8 | 1 | 7 | 7 | 4 |

### Example 2

The separate AI/ML configuration information may also include configuration information for AI/ML models, as shown in Table 8.

**Table 8: Separate AI/ML configuration information**

| AI/ML Function Configuration ID | Configuration information for AI/ML functions | Configuration information of AI/ML models |
|---|---|---|
| 1 | Feature 1: Not supported | |
| | Feature 2: Not supported | |
| | Feature 3: Not supported | |
| 2 | Feature 1: Support | Models used for AI Function 1: Model 1-1 (default Model), Model 1-2 |
| | Feature 2: Not supported | |
| | Feature 3: Not supported | |
| 3 | Feature 1: Support | Models used for AI Function 1: Model 1-1 |
| | Feature 2: Support | (default Model), Model 1-2 |
| | Feature 3: Not supported | Models used for AI Function 2: Model 2-1 (default Model), Model 2-2, Model 2-3 |
| 4 | Feature 1: Support | Models used for AI Function 1: Model 1-1 (default Model), Model 1-2 |
| | Feature 2: Support | |
| | Feature 3: Support | Models used for AI Function 2: Model 2-1 (default Model), Model 2-2, Model 2-3 |
| | | Models used for AI Function 3: Model 3-2 (default Model), Model 3-2, Model 3-3 |

Based on the AI/ML configuration information shown in Table 8, each time domain resource configuration may include an identifier of the AI/ML configuration, without including specific configuration information of AI/ML functions and AI/ML models (as shown in Table 9).

**Table 9: Time domain resource configuration information (including configuration identifier of AI/ML functions)**

| DCI Time Domain Resource Indicator | Configuration No. | K | S | L | Configuration Identifier of AI/ML Function |
|---|---|---|---|---|---|
| 000 | 1 | 0 | 0 | 7 | 1 |
| 001 | 2 | 1 | 0 | 7 | 3 |
| 010 | 3 | 0 | 0 | 14 | 1 |
| 011 | 4 | 1 | 0 | 14 | 3 |
| 100 | 5 | 0 | 7 | 4 | 2 |
| 101 | 6 | 1 | 7 | 4 | 4 |
| 110 | 7 | 0 | 7 | 7 | 2 |
| 111 | 8 | 1 | 7 | 7 | 4 |

Example 2 increases the flexibility of AI/ML configuration and avoids repeatedly configuring the same AI/ML configuration in multiple time domain resources, saving signaling overhead required for configuring time domain resource configuration information. At the same time, by including the AI/ML configuration ID in the time domain resource, the binding of the AI/ML function and model configuration to the time domain resource can still be achieved, ensuring the adaptability between the AI/ML configuration and the channel transmission resource, thereby ensuring the reliability of the wireless communication system.

In some implementations, before the terminal device receives the resource configuration information sent by the network device, the terminal device may send first capability information to the network device. The first capability information is used to indicate the AI/ML functions supported by the terminal device. The reporting of the first capability information may be performed for a bandwidth part (BWP). That is, the terminal device may report whether the terminal device supports AI/ML functions within a certain BWP. The AI/ML functions supported by the terminal device may be the same or different in different BWPs.

The first capability information may directly indicate the AI/ML functions supported by the terminal device, or may carry identifiers of AI/ML functions supported by the terminal device and/or identifiers of AI/ML functions not supported by the terminal device in the first capability information. Indicating based on identifiers of AI/ML functions can reduce the communication overhead required for capability information indication.

In some implementations, before the terminal device receives the resource configuration information sent by the network device, the terminal device may send second capability information to the network device. The second capability information is used to indicate the AI/ML models supported by the terminal device. The reporting of the second capability information may be performed for a BWP. That is, the terminal device may report whether the terminal device supports AI/ML models within a certain BWP. The AI/ML models supported by the terminal device may be the same or different in different BWPs. The first capability information and the second capability information may be reported to the network device via the same message, or may be reported to the network device via different messages respectively.

The second capability information may directly indicate the AI/ML models supported by the terminal device, or may carry identifiers of AI/ML models supported by the terminal device and/or identifiers of AI/ML models not supported by the terminal device in the second capability information. Indicating based on identifiers of AI/ML models can reduce the communication overhead required for capability information indication.

If one AI/ML function corresponds to multiple AI/ML models (i.e., the multiple AI/ML models can all be used to implement the AI/ML function, and different AI/ML models may correspond to different deployment scenarios), in some implementations, the second capability information may indicate a default AI/ML model among the multiple AI/ML models. Reporting the default AI/ML model to the network device helps reduce the signaling overhead of the network device (for a detailed description of the default model, refer to the foregoing, which will not be repeated here).

It should be noted that the AI/ML function (functionality) mentioned in various embodiments of the present disclosure may also be referred to as an AI/ML feature (feature), and the two may be used interchangeably wherein there is no conflict.

It should also be noted that the symbols mentioned in various embodiments of the present disclosure may all refer to orthogonal frequency division multiplexing (OFDM) symbols.

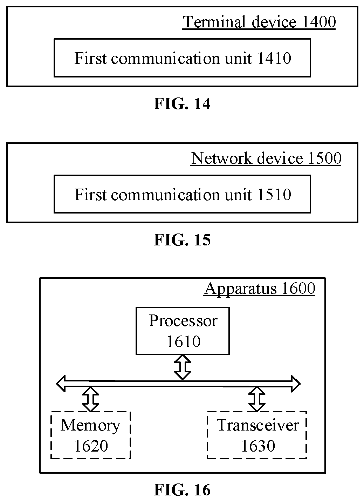

The method embodiments of the present disclosure have been described in detail above with reference to FIGS. 3 to 13. The apparatus embodiments of the present disclosure are described in detail below with reference to FIGS. 14 to 16. It should be understood that the description of the method embodiments corresponds to the description of the apparatus embodiments, so parts not described in detail can be referred to the preceding method embodiments.

FIG. 14 is a schematic structural diagram of a terminal device provided by an embodiment of the present disclosure. The terminal device 1400 shown in FIG. 14 may include a first communication unit 1410. The first communication unit 1410 may be configured to receive resource configuration information sent by a network device, wherein the resource configuration information includes first information and second information; wherein the first information is used to indicate time domain position information and time domain length information of a first time domain resource, and the first time domain resource is used to carry a first physical channel; wherein the second information is used to indicate AI/ML configuration information associated with the first time domain resource.

In some implementations, the AI/ML configuration information is used to configure an AI/ML function supported by the first time domain resource.

In some implementations, the AI/ML configuration information includes one or more of: an identifier of an AI/ML function supported by the first time domain resource; or an identifier of an AI/ML function not supported by the first time domain resource.

In some implementations, the AI/ML configuration information is used to configure an AI/ML model supported by the first time domain resource.

In some implementations, the AI/ML configuration information includes one or more of: an identifier of an AI/ML model supported by the first time domain resource; or an identifier of an AI/ML model not supported by the first time domain resource.

In some implementations, the AI/ML configuration information is used to configure multiple AI/ML models supported by the first time domain resource, and the multiple AI/ML models correspond to the same AI/ML function, and the multiple AI/ML models include a default AI/ML model.

In some implementations, the second information includes an identifier of the AI/ML configuration information, and the identifier of the AI/ML configuration information is used to identify the AI/ML configuration information associated with the first time domain resource.

In some implementations, the terminal device 1400 further includes: a second communication unit configured to receive first control information, wherein the first control information includes first indication information, and the first indication information is used to indicate the first information.

In some implementations, the terminal device 1400 further includes: a third communication unit configured to determine the first time domain resource according to the time domain position information and the time domain length information of the first time domain resource; and a fourth communication unit configured to receive or send the first physical channel in the first time domain resource according to the AI/ML configuration information associated with the first time domain resource.

In some implementations, the AI/ML configuration information is used to configure multiple AI/ML models supported by the first time domain resource, the multiple AI/ML models correspond to the same AI/ML function, and the first control information further includes second indication information, and the second indication information is used to indicate one AI/ML model among the multiple AI/ML models.

In some implementations, the multiple AI/ML models further include a default AI/ML model, and the default AI/ML model is used when the first control information does not include the second indication information.

In some implementations, the first control information is DCI, or MAC CE, or SCI.

In some implementations, the time domain position information includes one or more of: a starting slot of the first time domain resource; or a starting symbol of the first time domain resource.

In some implementations, the time domain length information includes one or more of: a number of slots occupied by the first time domain resource; or a number of symbols occupied by the first time domain resource.

In some implementations, the resource configuration information is RRC configuration information or SIB.

In some implementations, the terminal device 1400 further includes: a fifth communication unit configured to send first capability information to the network device before the terminal device receives the resource configuration information sent by the network device, wherein the first capability information is used to indicate AI/ML functions supported by the terminal device.

In some implementations, the first capability information includes one or more of: an identifier of an AI/ML function supported by the terminal device; or an identifier of an AI/ML function not supported by the terminal device.

In some implementations, the terminal device 1400 further includes: a sixth communication unit configured to send second capability information to the network device before the terminal device receives the resource configuration information sent by the network device, wherein the second capability information is used to indicate AI/ML models supported by the terminal device.

In some implementations, the second capability information includes one or more of: an identifier of an AI/ML model supported by the terminal device; or an identifier of an AI/ML model not supported by the terminal device.

In some implementations, the second capability information indicates that the terminal device supports multiple AI/ML models, the multiple AI/ML models correspond to the same AI/ML function, and the second capability information indicates a default AI/ML model among the multiple AI/ML models.

In some implementations, the first physical channel is a data channel.

In some implementations, the data channel is a PDSCH, a PUSCH, or a PSSCH.

FIG. 15 is a schematic structural diagram of a network device provided by an embodiment of the present disclosure. The network device 1500 shown in FIG. 15 may include a first communication unit 1510. The first communication unit 1510 is configured to send resource configuration information to a terminal device, wherein the resource configuration information includes first information and second information; wherein the first information is used to indicate time domain position information and time domain length information of a first time domain resource, and the first time domain resource is used to carry a first physical channel; wherein the second information is used to indicate AI/ML configuration information associated with the first time domain resource.

In some implementations, the AI/ML configuration information is used to configure an AI/ML function supported by the first time domain resource.

In some implementations, the AI/ML configuration information includes one or more of: an identifier of an AI/ML function supported by the first time domain resource; or an identifier of an AI/ML function not supported by the first time domain resource.

In some implementations, the AI/ML configuration information is used to configure an AI/ML model supported by the first time domain resource.

In some implementations, the AI/ML configuration information includes one or more of: an identifier of an AI/ML model supported by the first time domain resource; or an identifier of an AI/ML model not supported by the first time domain resource.

In some implementations, the AI/ML configuration information is used to configure multiple AI/ML models supported by the first time domain resource, and the multiple AI/ML models correspond to the same AI/ML function, and the multiple AI/ML models include a default AI/ML model.

In some implementations, the second information includes an identifier of the AI/ML configuration information, and the identifier of the AI/ML configuration information is used to identify the AI/ML configuration information associated with the first time domain resource.

In some implementations, the network device 1500 further includes: a second communication unit configured to send first control information to the terminal device, wherein the first control information includes first indication information, and the first indication information is used to indicate the first information.

In some implementations, the AI/ML configuration information is used to configure multiple AI/ML models supported by the first time domain resource, the multiple AI/ML models correspond to the same AI/ML function, and the first control information further includes second indication information, and the second indication information is used to indicate one AI/ML model among the multiple AI/ML models.

In some implementations, the multiple AI/ML models further include a default AI/ML model, and the default AI/ML model is used when the first control information does not include the second indication information.

In some implementations, the first control information is DCI, or MAC CE, or SCI.

In some implementations, the time domain position information includes one or more of: a starting slot of the first time domain resource; or a starting symbol of the first time domain resource.

In some implementations, the time domain length information includes one or more of: a number of slots occupied by the first time domain resource; or a number of symbols occupied by the first time domain resource.

In some implementations, the resource configuration information is RRC configuration information or SIB.

In some implementations, the network device 1500 further includes: a third communication unit configured to receive first capability information sent by the terminal device before the network device sends the resource configuration information to the terminal device, wherein the first capability information is used to indicate AI/ML functions supported by the terminal device.

In some implementations, the first capability information includes one or more of: an identifier of an AI/ML function supported by the terminal device; or an identifier of an AI/ML function not supported by the terminal device.

In some implementations, the network device 1500 further includes: a fourth communication unit configured to send second capability information to the network device before the network device sends the resource configuration information to the terminal device, wherein the second capability information is used to indicate AI/ML models supported by the terminal device.

In some implementations, the second capability information includes one or more of: an identifier of an AI/ML model supported by the terminal device; or an identifier of an AI/ML model not supported by the terminal device.

In some implementations, the second capability information indicates that the terminal device supports multiple AI/ML models, the multiple AI/ML models correspond to the same AI/ML function, and the second capability information indicates a default AI/ML model among the multiple AI/ML models.

In some implementations, the first physical channel is a data channel.

In some implementations, the data channel is a PDSCH, a PUSCH, or a PSSCH.

FIG. 16 is a schematic structural diagram of an apparatus for downlink transmission according to an embodiment of the present disclosure. The dashed lines in FIG. 16 indicate that the unit or module is optional. The apparatus 1600 may be used to implement the methods described in the above method embodiments. The apparatus 1600 may be a chip, a terminal, or a network device.

The apparatus 1600 may include one or more processors 1610. The processor 1610 may support the apparatus 1600 in implementing the methods described in the preceding method embodiments. The processor 1610 may be a general-purpose processor or a special-purpose processor. For example, the processor may be a central processing unit (CPU). Alternatively, the processor may be other general-purpose processors, digital signal processors (DSPs), application specific integrated circuits (ASICs), field programmable gate arrays (FPGAs) or other programmable logic devices, discrete gate or transistor logic devices, discrete hardware components, etc. A general-purpose processor may be a microprocessor or the processor may be any conventional processor, etc.

The apparatus 1600 may also include one or more memories 1620. A program is stored on the memory 1620, and the program can be executed by the processor 1610, so that the processor 1610 executes the methods described in the preceding method embodiments. The memory 1620 may be independent of the processor 1610 or may be integrated into the processor 1610.

The apparatus 1600 may also include a transceiver 1630. The processor 1610 may communicate with other devices or chips via the transceiver 1630. For example, the processor 1610 may transmit and receive data with other devices or chips via the transceiver 1630.

The present disclosure also provides a computer-readable storage medium for storing a program. The computer-readable storage medium may be applied to the terminal or network device provided in the embodiments of the present disclosure, and the program causes a computer to execute the methods performed by the terminal or network device in the various embodiments of the present disclosure.

The present disclosure also provides a computer program product. The computer program product includes a program. The computer program product may be applied to the terminal or network device provided in the embodiments of the present disclosure, and the program causes a computer to execute the methods performed by the terminal or network device in the various embodiments of the present disclosure.

The present disclosure also provides a computer program. The computer program may be applied to the terminal or network device provided in the embodiments of the present disclosure, and the computer program causes a computer to execute the methods performed by the terminal or network device in the various embodiments of the present disclosure.

It should be understood that in the embodiments of the present disclosure, "B corresponding to A" means that B is associated with A, and B can be determined according to A. However, it should also be understood that determining B according to A does not mean determining B only according to A, but B may be determined according to A and/or other information.

It should be understood that the term "and/or" herein is merely an association relationship describing associated objects, indicating that three relationships may exist. For example, A and/or B may indicate: A alone exists, A and B exist simultaneously, and B alone exists. In addition, the character "/" herein generally indicates that the associated objects before and after are in an "or" relationship.

It should be understood that in the various embodiments of the present disclosure, the sequence numbers of the above processes do not imply the order of execution. The execution order of the processes should be determined by their functions and internal logic, and should not constitute any limitation on the implementation process of the embodiments of the present disclosure.

The above descriptions are only specific implementations of the present disclosure, but the protection scope of the present disclosure is not limited thereto. Any changes or substitutions that can be easily conceived by any person skilled in the art within the technical scope disclosed in the present disclosure shall be covered by the protection scope of the present disclosure. Therefore, the protection scope of the present disclosure shall be subject to the protection scope of the claims.

## Claims

1. A resource configuration method, comprising:
receiving, by a terminal device, resource configuration information sent by a network device, wherein the resource configuration information comprises first information and second information;
wherein the first information is used to indicate time domain position information and time domain length information of a first time domain resource, and the first time domain resource is used to carry a first physical channel; and
wherein the second information is used to indicate artificial intelligence/machine learning (AI/ML) configuration information associated with the first time domain resource.

2. The method according to claim 1, wherein the AI/ML configuration information is used to configure an AI/ML function supported by the first time domain resource.

3. The method according to claim 2, wherein the AI/ML configuration information comprises one or more of:
an identifier of the AI/ML function supported by the first time domain resource; or
an identifier of an AI/ML function not supported by the first time domain resource.

4. The method according to any one of claims 1 to 3, wherein the AI/ML configuration information is used to configure an AI/ML model supported by the first time domain resource.

5. The method according to claim 4, wherein the AI/ML configuration information comprises one or more of:
the identifier of the AI/ML model supported by the first time domain resource; or
an identifier of an AI/ML model not supported by the first time domain resource.

6. The method according to claim 4 or 5, wherein the AI/ML configuration information is used to configure a plurality of AI/ML models supported by the first time domain resource, and the plurality of AI/ML models correspond to a same AI/ML function, and the plurality of AI/ML models comprise a default AI/ML model.

7. The method according to any one of claims 1 to 6, wherein the second information comprises an identifier of the AI/ML configuration information.

8. The method according to any one of claims 1 to 7, further comprising:
receiving, by the terminal device, first control information, wherein the first control information comprises first indication information, and the first indication information is used to indicate the first information.

9. The method according to claim 8, further comprising:
determining, by the terminal device, the first time domain resource according to the time domain position information and the time domain length information of the first time domain resource; and
receiving or sending, by the terminal device, the first physical channel in the first time domain resource according to the AI/ML configuration information associated with the first time domain resource.

10. The method according to claim 8 or 9, wherein the AI/ML configuration information is used to configure a plurality of AI/ML models supported by the first time domain resource, the plurality of AI/ML models correspond to a same AI/ML function, and the first control information further comprises second indication information, and the second indication information is used to indicate one AI/ML model among the plurality of AI/ML models.

11. The method according to claim 10, wherein the plurality of AI/ML models comprise a default AI/ML model, and the default AI/ML model is used when the first control information does not comprise the second indication information.

12. The method according to any one of claims 8 to 11, wherein the first control information is downlink control information (DCI), or media access control control element (MAC CE), or sidelink control information (SCI).

13. The method according to any one of claims 1 to 12, wherein the time domain position information comprises one or more of:
a starting slot of the first time domain resource; or
a starting symbol of the first time domain resource.

14. The method according to any one of claims 1 to 13, wherein the time domain length information comprises one or more of:
a number of slots occupied by the first time domain resource; or
a number of symbols occupied by the first time domain resource.

15. The method according to any one of claims 1 to 14, wherein the resource configuration information is radio resource control (RRC) configuration information or a system information block (SIB).

16. The method according to any one of claims 1 to 15, wherein before the terminal device receives the resource configuration information sent by the network device, the method further comprises:
sending, by the terminal device, first capability information to the network device, wherein the first capability information is used to indicate AI/ML functions supported by the terminal device.

17. The method according to claim 16, wherein the first capability information comprises one or more of:
an identifier of an AI/ML function supported by the terminal device; or
an identifier of an AI/ML function not supported by the terminal device.

18. The method according to any one of claims 1 to 17, wherein before the terminal device receives the resource configuration information sent by the network device, the method further comprises:
sending, by the terminal device, second capability information to the network device, wherein the second capability information is used to indicate AI/ML models supported by the terminal device.

19. The method according to claim 18, wherein the second capability information comprises one or more of:
an identifier of an AI/ML model supported by the terminal device; or
an identifier of an AI/ML model not supported by the terminal device.

20. The method according to claim 18 or 19, wherein the second capability information indicates that the terminal device supports a plurality of AI/ML models, the plurality of AI/ML models correspond to a same AI/ML function, and the second capability information indicates a default AI/ML model among the plurality of AI/ML models.

21. The method according to any one of claims 1 to 20, wherein the first physical channel is a data channel.

22. The method according to claim 21, wherein the data channel is a physical downlink shared channel (PDSCH), a physical uplink shared channel (PUSCH), or a physical sidelink shared channel (PSSCH).

23. A resource configuration method, comprising:
sending, by a network device, resource configuration information to a terminal device, wherein the resource configuration information comprises first information and second information;
wherein the first information is used to indicate time domain position information and time domain length information of a first time domain resource, and the first time domain resource is used to carry a first physical channel; and
wherein the second information is used to indicate artificial intelligence/machine learning (AI/ML) configuration information associated with the first time domain resource.

24. The method according to claim 23, wherein the AI/ML configuration information is used to configure an AI/ML function supported by the first time domain resource.

25. The method according to claim 24, wherein the AI/ML configuration information comprises one or more of:
an identifier of the AI/ML function supported by the first time domain resource; or
an identifier of an AI/ML function not supported by the first time domain resource.

26. The method according to any one of claims 23 to 25, wherein the AI/ML configuration information is used to configure an AI/ML model supported by the first time domain resource.

27. The method according to claim 26, wherein the AI/ML configuration information comprises one or more of:
the identifier of the AI/ML model supported by the first time domain resource; or
an identifier of an AI/ML model not supported by the first time domain resource.

28. The method according to claim 26 or 27, wherein the AI/ML configuration information is used to configure a plurality of AI/ML models supported by the first time domain resource, and the plurality of AI/ML models correspond to a same AI/ML function, and the plurality of AI/ML models comprise a default AI/ML model.

29. The method according to any one of claims 23 to 28, wherein the second information comprises an identifier of the AI/ML configuration information.

30. The method according to any one of claims 23 to 29, further comprising:
sending, by the network device, first control information to the terminal device, wherein the first control information comprises first indication information, and the first indication information is used to indicate the first information.

31. The method according to claim 30, wherein the AI/ML configuration information is used to configure a plurality of AI/ML models supported by the first time domain resource, the plurality of AI/ML models correspond to a same AI/ML function, and the first control information further comprises second indication information, and the second indication information is used to indicate one AI/ML model among the plurality of AI/ML models.

32. The method according to claim 31, wherein the plurality of AI/ML models comprise a default AI/ML model, and the default AI/ML model is used when the first control information does not comprise the second indication information.

33. The method according to any one of claims 30 to 32, wherein the first control information is downlink control information (DCI), or media access control control element (MAC CE), or sidelink control information (SCI).

34. The method according to any one of claims 23 to 33, wherein the time domain position information comprises one or more of:
a starting slot of the first time domain resource; or
a starting symbol of the first time domain resource.

35. The method according to any one of claims 23 to 34, wherein the time domain length information comprises one or more of:
a number of slots occupied by the first time domain resource; or
a number of symbols occupied by the first time domain resource.

36. The method according to any one of claims 23 to 35, wherein the resource configuration information is radio resource control (RRC) configuration information or a system information block (SIB).

37. The method according to any one of claims 23 to 36, wherein before the network device sends the resource configuration information to the terminal device, the method further comprises:
receiving, by the terminal device, first capability information sent by the terminal device, wherein the first capability information is used to indicate AI/ML functions supported by the terminal device.

38. The method according to claim 37, wherein the first capability information comprises one or more of:
an identifier of an AI/ML function supported by the terminal device; or
an identifier of an AI/ML function not supported by the terminal device.

39. The method according to any one of claims 23 to 38, wherein before the terminal device receives the resource configuration information sent by the network device, the method further comprises:
receiving, by the network device, second capability information sent by the terminal device, wherein the second capability information is used to indicate AI/ML models supported by the terminal device.

40. The method according to claim 39, wherein the second capability information comprises one or more of:
an identifier of an AI/ML model supported by the terminal device; or
an identifier of an AI/ML model not supported by the terminal device.

41. The method according to claim 39 or 40, wherein the second capability information indicates that the terminal device supports a plurality of AI/ML models, the plurality of AI/ML models correspond to a same AI/ML function, and the second capability information indicates a default AI/ML model among the plurality of AI/ML models.

42. The method according to any one of claims 23 to 41, wherein the first physical channel is a data channel.

43. The method according to claim 42, wherein the data channel is a physical downlink shared channel (PDSCH), a physical uplink shared channel (PUSCH), or a physical sidelink shared channel (PSSCH).

44. A terminal device, comprising:
a first communication unit, configured to receive resource configuration information sent by a network device, wherein the resource configuration information comprises first information and second information;
wherein the first information is used to indicate time domain position information and time domain length information of a first time domain resource, and the first time domain resource is used to carry a first physical channel; and
wherein the second information is used to indicate artificial intelligence/machine learning (AI/ML) configuration information associated with the first time domain resource.

45. The terminal device according to claim 44, wherein the AI/ML configuration information is used to configure an AI/ML function supported by the first time domain resource.

46. The terminal device according to claim 45, wherein the AI/ML configuration information comprises one or more of:
an identifier of the AI/ML function supported by the first time domain resource; or
an identifier of an AI/ML function not supported by the first time domain resource.

47. The terminal device according to any one of claims 44 to 46, wherein the AI/ML configuration information is used to configure an AI/ML model supported by the first time domain resource.

48. The terminal device according to claim 47, wherein the AI/ML configuration information comprises one or more of:
the identifier of the AI/ML model supported by the first time domain resource; or
an identifier of an AI/ML model not supported by the first time domain resource.

49. The terminal device according to claim 47 or 48, wherein the AI/ML configuration information is used to configure a plurality of AI/ML models supported by the first time domain resource, and the plurality of AI/ML models correspond to a same AI/ML function, and the plurality of AI/ML models comprise a default AI/ML model.

50. The terminal device according to any one of claims 44 to 49, wherein the second information comprises an identifier of the AI/ML configuration information.

51. The terminal device according to any one of claims 44 to 50, further comprising:
a second communication unit configured to receive first control information, wherein the first control information comprises first indication information, and the first indication information is used to indicate the first information.

52. The terminal device according to claim 51, further comprising:
a third communication unit configured to determine the first time domain resource according to the time domain position information and the time domain length information of the first time domain resource; and
a fourth communication unit configured to receive or send, by the terminal device, the first physical channel in the first time domain resource according to the AI/ML configuration information associated with the first time domain resource.

53. The terminal device according to claim 51 or 52, wherein the AI/ML configuration information is used to configure a plurality of AI/ML models supported by the first time domain resource, the plurality of AI/ML models correspond to a same AI/ML function, and the first control information further comprises second indication information, and the second indication information is used to indicate one AI/ML model among the plurality of AI/ML models.

54. The terminal device according to claim 53, wherein the plurality of AI/ML models comprise a default AI/ML model, and the default AI/ML model is used when the first control information does not comprise the second indication information.

55. The terminal device according to any one of claims51 to 54, wherein the first control information is downlink control information (DCI), or media access control control element (MAC CE), or sidelink control information (SCI).

56. The terminal device according to any one of claims 44 to 55, wherein the time domain position information comprises one or more of:
a starting slot of the first time domain resource; or
a starting symbol of the first time domain resource.

57. The terminal device according to any one of claims 44 to 56, wherein the time domain length information comprises one or more of:
a number of slots occupied by the first time domain resource; or
a number of symbols occupied by the first time domain resource.

58. The terminal device according to any one of claims 44 to 57, wherein the resource configuration information is radio resource control (RRC) configuration information or a system information block (SIB).

59. The terminal device according to any one of claims 44 to 58, further comprising:
a fifth communication unit configured to: send first capability information to the network device before the terminal device receives the resource configuration information sent by the network device, , wherein the first capability information is used to indicate AI/ML functions supported by the terminal device.

60. The terminal device according to claim 59, wherein the first capability information comprises one or more of:
an identifier of an AI/ML function supported by the terminal device; or
an identifier of an AI/ML function not supported by the terminal device.

61. The terminal device according to any one of claims 44 to 60, further comprising:
a sixth communication unit configured to: send second capability information to the network device before the terminal device receives the resource configuration information sent by the network device, wherein the second capability information is used to indicate AI/ML models supported by the terminal device.

62. The terminal device according to claim 61, wherein the second capability information comprises one or more of:
an identifier of an AI/ML model supported by the terminal device; or
an identifier of an AI/ML model not supported by the terminal device.

63. The terminal device according to claim 61 or 62, wherein the second capability information indicates that the terminal device supports a plurality of AI/ML models, the plurality of AI/ML models correspond to a same AI/ML function, and the second capability information indicates a default AI/ML model among the plurality of AI/ML models.

64. The terminal device according to any one of claims 44 to 63, wherein the first physical channel is a data channel.

65. The terminal device according to claim 64, wherein the data channel is a physical downlink shared channel (PDSCH), a physical uplink shared channel (PUSCH), or a physical sidelink shared channel (PSSCH).

66. A network device, comprising:
a first communication unit configured to send resource configuration information to a terminal device, wherein the resource configuration information comprises first information and second information;
wherein the first information is used to indicate time domain position information and time domain length information of a first time domain resource, and the first time domain resource is used to carry a first physical channel; and
wherein the second information is used to indicate artificial intelligence/machine learning (AI/ML) configuration information associated with the first time domain resource.

67. The network device according to claim 66, wherein the AI/ML configuration information is used to configure an AI/ML function supported by the first time domain resource.

68. The network device according to claim 67, wherein the AI/ML configuration information comprises one or more of:
an identifier of the AI/ML function supported by the first time domain resource; or
an identifier of an AI/ML function not supported by the first time domain resource.

69. The network device according to any one of claims 66 to 68, wherein the AI/ML configuration information is used to configure an AI/ML model supported by the first time domain resource.

70. The network device according to claim 69, wherein the AI/ML configuration information comprises one or more of:
the identifier of the AI/ML model supported by the first time domain resource; or
an identifier of an AI/ML model not supported by the first time domain resource.

71. The network device according to claim 69 or 70, wherein the AI/ML configuration information is used to configure a plurality of AI/ML models supported by the first time domain resource, and the plurality of AI/ML models correspond to a same AI/ML function, and the plurality of AI/ML models comprise a default AI/ML model.

72. The network device according to any one of claims 66 to 71, wherein the second information comprises an identifier of the AI/ML configuration information.

73. The network device according to any one of claims 66 to 72, further comprising:
a second communication unit configured to send first control information to the terminal device, wherein the first control information comprises first indication information, and the first indication information is used to indicate the first information.

74. The network device according to claim 73, wherein the AI/ML configuration information is used to configure a plurality of AI/ML models supported by the first time domain resource, the plurality of AI/ML models correspond to a same AI/ML function, and the first control information further comprises second indication information, and the second indication information is used to indicate one AI/ML model among the plurality of AI/ML models.

75. The network device according to claim 74, wherein the plurality of AI/ML models comprise a default AI/ML model, and the default AI/ML model is used when the first control information does not comprise the second indication information.

76. The network device according to any one of claims 73 to 75, wherein the first control information is downlink control information (DCI), or media access control control element (MAC CE), or sidelink control information (SCI).

77. The network device according to any one of claims 66 to76, wherein the time domain position information comprises one or more of:
a starting slot of the first time domain resource; or
a starting symbol of the first time domain resource.

78. The network device according to any one of claims 66 to 77, wherein the time domain length information comprises one or more of:
a number of slots occupied by the first time domain resource; or
a number of symbols occupied by the first time domain resource.

79. The network device according to any one of claims 66 to 78, wherein the resource configuration information is radio resource control (RRC) configuration information or a system information block (SIB).

80. The network device according to any one of claims 66 to 79, further comprising:
a third communication unit configured to receive first capability information sent by the terminal device before the network device sends the resource configuration information to the terminal device, wherein the first capability information is used to indicate AI/ML functions supported by the terminal device.

81. The network device according to claim 80, wherein the first capability information comprises one or more of:
an identifier of an AI/ML function supported by the terminal device; or
an identifier of an AI/ML function not supported by the terminal device.

82. The network device according to any one of claims 66 to 81, further comprising:
a fourth communication unit configured to send second capability information to the network device before the network device sends the resource configuration information to the network device, wherein the second capability information is used to indicate AI/ML models supported by the terminal device.

83. The network device according to claim 82, wherein the second capability information comprises one or more of:
an identifier of an AI/ML model supported by the terminal device; or
an identifier of an AI/ML model not supported by the terminal device.

84. The network device according to claim 82 or 83, wherein the second capability information indicates that the terminal device supports a plurality of AI/ML models, the plurality of AI/ML models correspond to a same AI/ML function, and the second capability information indicates a default AI/ML model among the plurality of AI/ML models.

85. The network device according to any one of claims 66 to 84, wherein the first physical channel is a data channel.

86. The network device according to claim 85, wherein the data channel is a physical downlink shared channel (PDSCH), a physical uplink shared channel (PUSCH), or a physical sidelink shared channel (PSSCH).

87. A terminal device, comprising a transceiver, a memory, and a processor, wherein the memory is configured to store a program, and the processor is configured to invoke the program in the memory and control the transceiver to receive or send signals to enable the terminal device to perform the method according to any one of claims 1 to 22.

88. A network device, comprising a transceiver, a memory, and a processor, wherein the memory is configured to store a program, and the processor is configured to invoke the program in the memory and control the transceiver to receive or send signals to enable the network device to perform the method according to any one of claims 23 to 43.

89. An apparatus, comprising a processor configured to invoke a program from a memory to enable the apparatus to perform the method according to any one of claims 1 to 22 or 23 to 43.

90. A chip, comprising a processor configured to invoke a program from a memory to enable a device equipped with the chip to perform the method according to any one of claims 1 to 22 or 23 to 43.

91. A computer-readable storage medium having stored thereon a program for enabling a computer to perform the method according to any one of claims 1 to 22 or 23 to 43.

92. A computer program product, comprising a program for enabling a computer to perform the method according to any one of claims 1 to 22 or 23 to 43.

93. A computer program for enabling a computer to perform the method according to any one of claims 1 to 22 or 23 to 43.
